# EUROPEAN PATENT SPECIFICATION

(11) **EP 2 819 258 B1**
(45) Date of publication and mention of the grant of the patent: **03.05.2017**
(21) Application number: 13752109.2
(22) Date of filing: 20.02.2013
(51) Int. Cl.: H02G 5/06, H02B 13/02

(54) **GAS INSULATED SWITCHGEAR AND GAS INSULATED BUSBAR**
GASISOLIERTES SCHALTANLAGE UND GASISOLIERTE STROMSCHIENE
APPAREILLAGE DE COMMUTATION ISOLÉ AU GAZ ET BARRE OMNIBUS ISOLÉE AU GAZ

(30) Priority: 21.02.2012 JP 2012035267
(43) Date of publication of application: 31.12.2014
(73) Proprietor: Kabushiki Kaisha Toshiba, Minato-ku Tokyo 105-8001 (JP)
(72) Inventor: YASUOKA, Takanori, Tokyo 105-8001 (JP); HOSHINA, Yoshikazu, Tokyo 105-8001 (JP); SHIMAMURA, Akira, Tokyo 105-8001 (JP); SHIIKI, Motoharu, Tokyo 105-8001 (JP)
(74) Representative: Awapatent AB
(86) International application number: PCT/JP2013/054097
(87) International publication number: WO 2013/125554

(56) References cited:
- JP-A- H1 023 620
- JP-A- H03 222 611
- JP-A- H08 211 107
- JP-A- S51 141 385
- JP-A- S61 109 411
- JP-A- S61 109 411
- JP-A- S61 153 960
- JP-A- 2000 125 451
- JP-A- 2000 184 563
- JP-A- 2008 271 744

## Description

### TECHNICAL FIELD

Embodiments of the present disclosure relate to a gas insulated switchgear utilized in power generation stations and transformer stations, and a gas insulated bus of the gas insulated switchgear.

### BACKGROUND ART

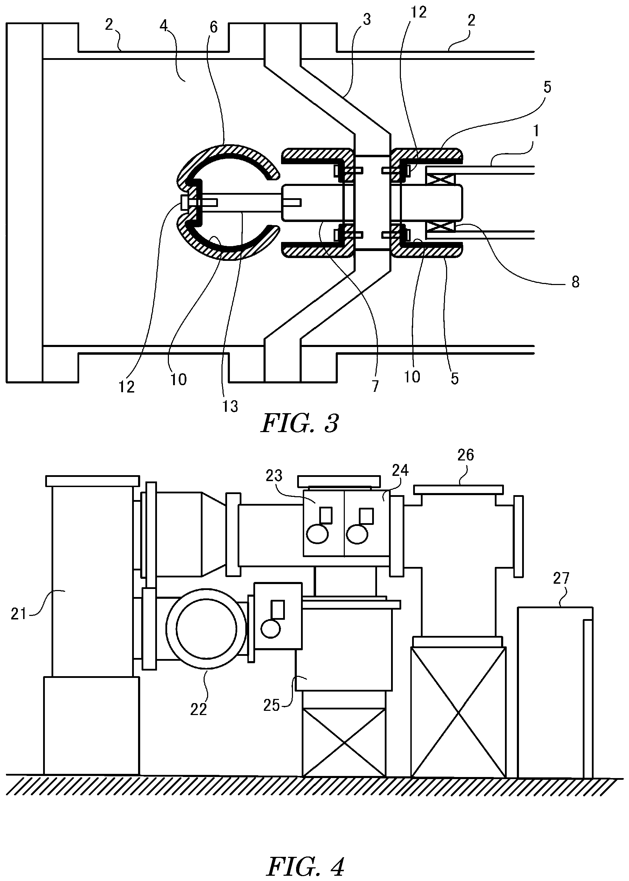

Recently, in large-voltage capacity power systems, such as high power generation stations and transformer stations, switchgears are broadly utilized. As illustrated in FIG. 4, a switchgear includes a breaker 21, a bus 22, a disconnector 23, a ground switch 24, a voltage transformer 25, and a cable head 26, and is controlled by a control board 27. The breaker 21 has one end connected to the bus 22, and has the other end connected to the cable head 26 at the cable-line side through the disconnector 23, the ground switch 24, and the voltage transformer 25, etc. The respective elements are electrically connected one another through a high-voltage conductor.

Recently, there are demands for the switchgears, such as an adaptation to an underground transformer station in an urban area, and an improvement of the economic efficiency, and thus the downsizing of the switchgear is an immediate task. In particular, improvement of the insulation performance of the switchgear has an remarkably important role to advance the downsizing of the switchgear.

Hence, gas insulated switchgears (GIS) having the insulation performance improved become nowadays popular. This gas insulated switchgear has the breaker 21, the bus 22, the disconnector 23, the ground switch 24, the voltage transformer 25, and the high-voltage conductors connecting those together, which are electrically insulated and retained in a sealed container filled with an insulation gas for insulation and arc-extinguishing. An example insulation gas is SF₆.

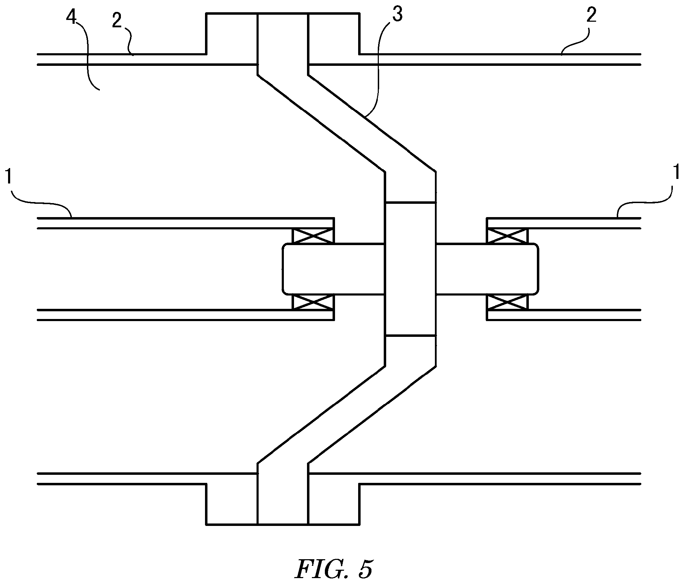

An explanation will be given of, for example, the bus 22. As illustrated in FIG. 5, according to the bus 22, a high-voltage conductor 1 for electrical conduction is inserted in a sealed container 2. The high-voltage conductor 1 is supported by a supporter 3 that is an insulator in the sealed container 2, and does not contact the sealed container 2. An insulation gas 4 is filled in this sealed container 2. Note that a connection device which retains the high-voltage conductor and connects the respective elements employs substantially same structure.

As explained above, the gas insulated switchgear has excellent insulation performance and safety, and enables a reduction of the installation space. However, in the bus 22 and the connection device retaining the high-voltage conductor thereinside, a high electric field is likely to be generated around the supporter 3 that is an insulator, and the bus end. Hence, in order to further improve the insulation performance of the gas insulated switchgear, it is necessary to address an insulation breakdown by this high electric field.

In order to prevent the insulation breakdown by the high electric field generated near the supporter 3 and the bus end, an insulation coating structure is applicable, in which the electrode portion generating a high electric field is covered with an insulator (see, for example, Patent Document 1). In addition, an insulator molding structure is also applicable, in which the electrode portion generating a high electric field is molded by an insulator (see, for example, Patent Document 2). Still further, a discharging barrier structure which disposes a barrier insulator between a portion generating the high electric field and the grounded metal container, and allows the barrier insulator to function as a discharging barrier to suppress an advancement of discharging occurring at the high-electric-field portion is also applicable (see, for example, Patent Document 3).

Another known alternative is to have a barrier between a portion generating the high electric field and the grounded metal container in the form of an aluminum shield having an insulating layer formed thereon (see for Example Patent Document 4).

### CITATION LIST

### PATENT LITERATURE

Patent Document 1: JP 3028975 B
Patent Document 2: JP 2007-274822 A
Patent Document 3: JP 4177628 B
Patent Document 4: JP S61-153960 A

### SUMMARY

### TECHNICAL PROBLEM

As to insulation breakdown suppression employing the insulation coating structure and the insulator molding structure disclosed in Patent Documents 1 and 2, the following technical problems have been pointed out. That is, according to such insulation breakdown suppression, it is necessary to coat or mold the electrode with the insulator, and thus voids, peeling, and pin-holes are likely to be caused in the coating or mold, which strongly affects the insulation performance.

In addition, when applying a coating or a mold of an insulator or a resin on the electrode surface, a pre-process is necessary for the electrode surface to improve the adhesiveness. When the surface roughness of the electrode surface where the coating or molding is applied is high, a local electric-field intensiveness occurs at such a location, thus a remarkable improvement of the insulation performance cannot be assumed. Hence, it is important to finish the electrode surface smoothly, and it is necessary to strictly control the surface roughness. In addition, it is necessary to control the processes shape (rounded portion) of the electrode itself. Hence, when the insulation breakdown suppression is applied, the manufacturing process of the gas insulated switchgear becomes complex. Moreover, since coating or molding is applied to the electrode, the weight increases by what corresponds to such coating or molding, deteriorating the assembling workability.

According to the insulation breakdown suppression based on the discharging barrier structure disclosed in Patent Document 3, the following technical problem has been pointed out. That is, when the barrier insulator is disposed between the high-voltage conductor and the grounded metal container, the electric field at the high-voltage-conductor portion increases in comparison with a case in which no barrier insulator is disposed, and a discharging start electric field is reduced. Hence, in the discharging barrier structure, also, the deterioration of the insulation reliability is a problem. Furthermore, in order to dispose the barrier insulator, the shape of the supporter that supports the barrier insulator becomes complex, the weight increases by what corresponds to such a complex shape, and the assembling workability is deteriorated.

Embodiments of the present disclosure have been made to address the aforementioned problems, and it is an obj ective to provide a gas insulated switchgear and a gas insulated bus which have improved insulation performance and insulation reliability.

### SOLUTION TO PROBLEM

To accomplish the above objective, a gas insulated switchgear according to an embodiment includes a sealed container filled with an insulation gas, an insulated supporter, and a high-voltage conductor supported by the supporter and inserted in the sealed container. This gas insulated switchgear includes an insulator present between the supporter and the high-voltage conductor. In addition, a conductive layer is formed on an opposing face of the insulator to the high-voltage conductor, and is electrically connected to the high-voltage conductor.

A gas insulated switchgear according to a first example includes a sealed container filled with an insulation gas, and a high-voltage conductor inserted in the sealed container. The gas insulated switchgear further includes an insulator present between an electrical-line end of the high-voltage conductor and the sealed container. In addition, a conductive layer is formed on an opposing face of the insulator to a bus end and is electrically connected to the high-voltage conductor.

A gas insulated bus according to an example includes a sealed container filled with an insulation gas, and a high-voltage conductor inserted in the sealed container. The gas insulated bus includes an insulator provided between the bus end of the high-voltage conductor and the sealed container. In addition, a conductive layer is formed on an opposing face of the insulator to the bus end and is electrically connected to the high-voltage conductor.

A gas insulated switchgear according to another example includes a sealed container filled with an insulation gas, a high-voltage conductor inserted in the sealed container, and an insulated supporter supporting the high-voltage conductor in the sealed container. An insulator is provided between the supporter and the high-voltage conductor, and a conductive layer is formed on an opposing face of the insulator to the high-voltage conductor and is electrically connected thereto.

### BRIEF DESCRIPTION OF DRAWINGS

FIG. 1 is an exemplary diagram illustrating a high-voltage-conductor portion of a gas insulated switchgear according to an embodiment;
FIG. 2 is an exemplary diagram illustrating a high-voltage-conductor portion of a gas insulated switchgear according to a first example not part of the invention as claimed;
FIG. 3 is an exemplary diagram illustrating a high-voltage-conductor portion of a gas insulated switchgear according to a second example not part of the invention as claimed;
FIG. 4 is an exemplary diagram illustrating an entire structure of a gas insulated switchgear; and
FIG. 5 is an exemplary diagram illustrating a structure of a high-voltage-conductor portion of a conventional gas insulated switchgear.

### DESCRIPTION OF EMBODIMENTS

Respective embodiments of a gas insulated switchgear will be specifically explained with reference to the drawings.

### (Embodiment)

### (Structure)

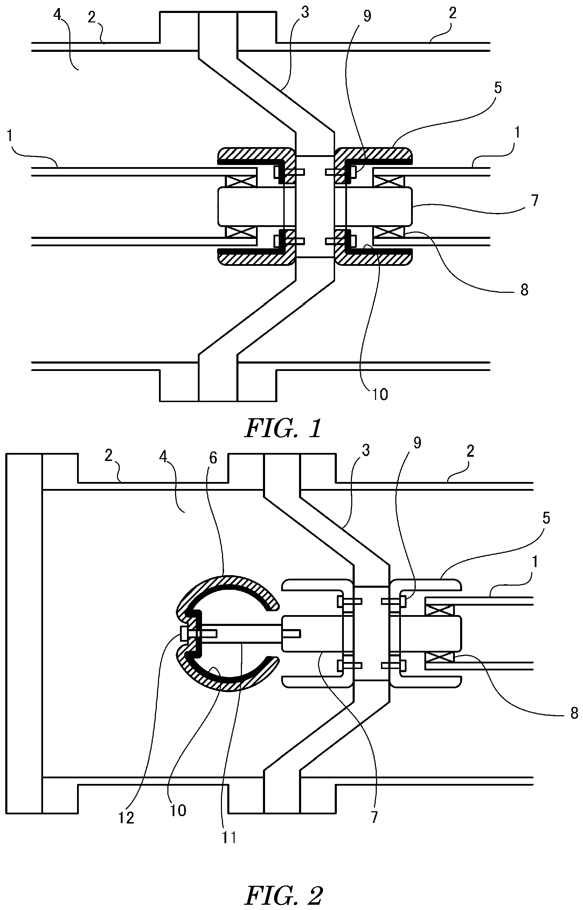

First, a gas insulated switchgear and a gas insulated bus according to an embodiment will be explained. FIG. 1 illustrates a bus 22 or a connection device retaining a high-voltage conductor 1 thereinside, provided to the gas insulated switchgear of the embodiment. As illustrated in FIG. 1, the high-voltage conductor 1 is supported by a supporter 3, and is inserted in a sealed container 2. An electric-field easing shield 5 is present between the high-voltage conductor 1 and the supporter 3.

The sealed container 2 is a metallic container. This sealed container 2 is filled with an insulation gas 4. An example insulation gas 4 is SF₆. Recently, the SF₆ gas has a high global warming coefficient, and is subjected to an emission constraint. Hence, in view of an environmental load reduction, the filled insulation gas 4 may be air, carbon dioxide, oxygen, nitrogen which are naturally delivered gases, or a mixed gas thereof.

The supporter 3 is an insulator, and is in a cone shape. A flange is formed at the basal end of the supporter 3. The supporter 3 has the flange held at the joined portion of the sealed container 2, thereby being attached inside the sealed container 2 with the vertex of the cone aligned with the axial line of the sealed container 2.

The cone vertex portion of the supporter 3 is a plane area. An opening one-size smaller than the plane area is provided in the plane area of the supporter 3. A contact terminal 7 is fitted in the opening of the supporter 3. The contact terminal 7 is a circular cylinder longer than the thickness of the cone vertex portion of the supporter 3, and protrudes from both sides of the supporter 3.

The high-voltage conductor 1 is a circular cylinder formed of a single material like aluminum or copper. The high-voltage conductors 1 are disposed oppositely at the front face of the cone vertex portion of the supporter 3 and the back face thereof, and substantially coaxial with the axial line of the sealed container 2. At least both ends of the high-voltage conductor 1 are hollow. The contact terminal 7 passing all the way through the supporter 3 is fitted in the hollow, and thus the high-voltage conductor 1 is supported by the supporter 3 through the contact terminal 7.

In addition, conductive contacts 8 are provided inside both ends of the high-voltage conductor 1. The contact 8 contacts the surrounding area of the tip of the contact terminal 7 and the internal face of the high-voltage conductor 1. That is, the high-voltage conductor 1 is electrically connected to the adjoining high-voltage conductor 1 via the contact terminal 7 and the contact 8. In the middle end portion of the bus 22 or the connecting device, such electrical connection joins multiple high-voltage conductor 1, thereby forming a single electrical line as a whole.

The electric-field shield 5 is an insulator in a cup shape formed by molding a thermoplastic plastic with a die. This electric-field easing shield 5 has the cup internal face and external face formed so as to have a surface roughness of equal to or smaller than 5 µm. After formed, the surface roughness may be adjusted using abrasive compounds.

This electric-field easing shield 5 has a bottom formed with an opening where the contact terminal 7 passes through, and the edge of the bottom is present between the plane area provided at the cone vertex of the supporter 3 and the peripheral edge of the high-voltage conductor 1. This shield is fastened to the plane area provided at the cone vertex of the supporter 3 by a metallic bolt 9. The electric-field easing shield 5 is fastened by the metallic bolt 9, thereby being electrically connected with the contact terminal 7 and the high-voltage conductor 1.

The side wall of the electric-field easing shield 5 has a length sufficiently covering the contact 8 in an attached condition. This electric-field easing shields 5 are fastened to both sides of the supporter 3, and cover respective ends of the high-voltage conductors 1 present at both sides of the supporter 3. However, the electric-field easing shield 5 and the high-voltage conductor 1 are disposed separately at a predetermined distance. That is, the electric-field easing shield 5 has a larger internal diameter than an outer diameter of the high-voltage conductor 1, and has a thinner bottom than a distance between the high-voltage conductor 1 and the supporter 3.

Still further, a conductive layer 10 is formed on the internal surface of the electric-field easing shield 5, i.e., an opposing face to the high-voltage conductor 1 across the bottom and the side-wall internal surface. More specifically, this conductive layer 10 is a high conductive layer, a semi conductive layer, or a non-linear conductive layer (in other words, a non-linear resistive layer). For example, this conductive layer 10 is formed by a technique of coating or deposition.

### (Action and Advantageous Effects)

An explanation will be given of an action of such a gas insulated switchgear and advantageous effects thereof. First, although the electric-field easing shield 5 is an insulator, the conductive layer 10 is formed on the internal surface, and thus such a shield has a similar characteristic as an insulation covering is applied to a metallic shield. That is, electric-field electron discharge from the metal surface (cathode) affecting a formation of discharging caused when the electric-field easing shield 5 is formed of metal can be remarkably suppressed, thereby increasing the withstand voltage performance. Conversely, an electric-field increase of the high-voltage conductor 1 caused when the electric-field easing shield 5 is formed of insulator and a reduction of a discharge starting field can be prevented. Thus, both problems when the electric-field easing shield 5 is formed of metal or insulator can be addressed, and the insulation performance remarkably increases.

In addition, voids, peeling, and pin-holes caused in the covering when an insulation coating is applied to the metallic electric-field easing shield or when the metallic electric-field easing shield is molded with resin can be avoided, thereby enhancing the insulation reliability.

Moreover, the surface roughness of the internal surface and that of the external surface are made smooth when the electric-field easing shied 5 is formed, and thus a reduction of a local electric-field intensiveness due to a surface roughness is expectable. In particular, since the conductive layer 10 is formed on the internal surface of the plastic, the electric conductivity becomes controllable, and a reduction of an electric field at a high-electric-field portion becomes easy.

Still further, since the electric-field easing shield 5 is formed of plastic, the weight can be reduced, and the assembling workability can be improved.

### (First Example)

### (Structure)

Next, a gas insulated switchgear and a gas insulated bus according to a first example will be explained. FIG. 2 illustrates a connection device retaining thereinside the bus 22 of the gas insulated switchgear or the high-voltage conductor 1 of the first example. As illustrated in FIG. 2, according to the gas insulated switchgear of the first example, an end shield 6 is provided at an end of an electrical line formed by the high-voltage conductors 1.

The end shield 6 is hollow, spherical and pot shaped having an area opened, and is an insulator formed by molding a thermoplastic plastic using a die. This end shield 6 has the ball internal surface and external surface formed or polished so as to have a surface roughness of equal to or smaller than 5 µm.

This end shield 6 has the opening directed to the electrical line end of the high-voltage conductor 1 in the sealed container 2, and is present between this electrical line end and the sealed container 2. More specifically, the terminal end of the electrical line by the high-voltage conductor 1 has the high-voltage conductor 1 supported only at one side of the supporter 3, and the contact terminal 7 is exposed at the other side of the supporter 3. The end shield 6 has the opening disposed near the exposed end of the contact terminal 7.

A metallic stud 11 is provided at the exposed end of the contact terminal 7. The metallic stud 11 has the lengthwise direction consistent with the lengthwise direction of the contact terminal 7. Conversely, a plastic bolt 12 and a seat of the metallic stud 11 are formed at the pot bottom of the end shield 6. With the metallic stud 11 being inserted in the opening of the end shield 6, causing the pot bottom of the end shield 6 to abut the tip of the metallic stud 11, the end shield 6 is fastened by the plastic bolt 12, thereby being disposed between the electrical-line end of the high-voltage conductor 1 and the sealed container 2. When connected with the metallic stud 11, the end shield 6 is electrically connected with the contact terminal 7 and the high-voltage conductor 1. Note that the plastic bolt 12 is formed of the same material as that of the end shield 6.

The metallic stud 11 has substantially same length between the pot bottom of the end shield 6 and the opening or is slightly larger. That is, the opening of the end shield 6 is present near the tip of the contact terminal 7. In addition, the opening diameter of the end shield 6 is larger than the diameter of the contact terminal 7, and the electric field generated at the contact terminal 7 passes through the interior of the end shield 6. The interior of the end shield 6, i.e., the opposing face with the electrical-line end by the high-voltage conductor 1 is formed with the conductive layer 10 like the electric-field easing shield 5.

In such an electrical-line end by the high-voltage conductor 1, the electric-field easing shield 5 may be provided between the high-voltage conductor 1 and the supporter 3, and between the exposed contact terminal 7 and the supporter 3.

### (Action and Advantageous Effects)

An action of such a gas insulated switchgear and advantageous effects thereof will be explained. In this gas insulated switchgear, an insulation breakdown by the electric field generated at the electrical-line end by the high-voltage conductor 1 can be prevented by the similar function as that of the electric-field easing shield 5. That is, although the end shield 6 is an insulator, the conductive layer 10 is formed on the internal surface thereof, and thus the end shield has the similar characteristic as if an insulation covering is applied to a metallic shield.

That is, an electric-field electron discharge from the metallic surface (cathode) affecting a discharge formation caused when the end shield is formed of metal can be remarkably suppressed, and thus the withstand voltage performance can be improved. Conversely, an electric field increase of the high-voltage conductor 1 when the end shield is formed of insulator and a reduction of the discharging start electric field become preventable. Thus, both problems when the end shield is formed of metal or insulator can be addressed, and thus the insulation performance remarkably increases.

In addition, voids, peeling, and pin-holes caused in the covering when an insulation coating is applied to the metallic end shield or when the metallic end shield is molded with resin can be avoided, thereby enhancing the insulation reliability.

Moreover, since the internal surface of the end shield 6 and the external surface thereof are formed so as to have a smooth surface roughness at the time of forming the end shield 6, a reduction effect of a local electric-field intensiveness due to the surface roughness is expectable. In particular, since the conductive layer 10 is formed on the internal surface of the plastic, the electric conductivity can be freely controlled, facilitating a reduction of the electric field at a high-electric-field portion.

Since the end shield 6 is formed of plastic, the end shield 6 can be made lightweight, and an assembling workability is improved.

### (Second Example)

### (Structure)

Next, an explanation will be given of a gas insulated switchgear and a gas insulated bus according to a second example with reference to FIG. 3. The same structure as those of the embodiment and second example will be denoted by the same reference numeral, and the detailed explanation thereof will be omitted.

According to the second example, the electric-field easing shield 5 is fastened to the supporter 3 by a plastic bolt 12, and the end shield 6 is connected to a plastic stud 13. The electric-field easing shield 5 and the end shield 6 are not electrically connected with the high-voltage conductor 1 and the contact terminal 7 since the plastic bolt 12 and the plastic stud 13 are insulators, not externally biased, and not grounded. Hence, the opposing face of the electric-field easing shield 5 and that of the end shield 6 with the high-voltage conductor 1, i.e., the conductive layers 10 have a floating potential. The floating potential is generated by a charge-up of electrons or ions when irradiated within an electric field generated from the high-voltage conductor 1, and depends on such an electric field.

### (Action and Advantageous Effects)

Since the internal surface potential of the electric-field easing shield 5 and that of the end shield 6 are set as a floating potential, the potential of the internal shield surface becomes slightly smaller than those of the high-voltage conductor 1 and the contact terminal 7. Hence, an electric field value generated on the outer surface of the electric-field easing shield 5 and the end shield 6 can be reduced, thereby further enhancing the insulation performance.

The explanation was given of the example case in which the electric-field easing shield 5 is formed by plastic molding, but a structure replaced with other insulation materials is applicable.

### REFERENCE SIGNS LIST

- 1: High-voltage conductor
- 2: Sealed container
- 3: Supporter
- 4: Insulation gas
- 5: Electric-field easing shield
- 6: End shield
- 7: Contact terminal
- 8: Contact
- 9: Metallic bolt
- 10: Conductive layer
- 11: Metallic stud
- 12: Plastic bolt
- 13: Plastic stud
- 21: Breaker
- 22: Bus
- 23: Disconnector
- 24: Ground switch
- 25: Transformer
- 8: Contact
- 9: Metallic bolt
- 10: Conductive layer
- 11: Metallic stud
- 12: Plastic bolt
- 13: Plastic stud
- 21: Breaker
- 22: Bus
- 23: Disconnector
- 24: Ground switch
- 25: Transformer

## Claims

1. A gas insulated switchgear comprising:
a sealed container (2) filled with an insulation gas (4),
an insulated supporter (3),
a high-voltage conductor (1) supported by the supporter (3) and inserted in the sealed container (2),
**characterized by** an electric-field easing shield (5) that is an insulator fastened to both sides of the supporter (3) to be present between the supporter (3) and the high-voltage conductor (1); and
a conductive layer (10) formed only on an internal surface of the electric-field easing shield (5) that is an opposing face to the high-voltage conductor (1), and electrically connected to the high-voltage conductor (1).

2. The gas insulated switchgear according to claim 1, wherein the conductive layer (10) is highly conductive, semi conductive, or non-linearly conductive.

3. The gas insulated switchgear according to claim 1, wherein the electric-field easing shield (5) is a thermoplastic plastic having undergone molding using a die.

4. The gas insulated switchgear according to claim 1, wherein an external surface of the electric-field easing shield (5) opposite to the internal face has a surface roughness of equal to or smaller than 5 µm.

5. The gas insulated switchgear according to claim 1, wherein the internal face of the electric-field easing shield (5) has a surface roughness of equal to or smaller than 5 µm.

## Patentansprüche

1. Gasisolierte Schaltanlage, die Folgendes umfasst:
einen verschlossenen Behälter (2), der mit einem Isoliergas (4) gefüllt ist,
einen isolierten Träger (3),
einen Hochspannungsleiter (1), der durch den Träger (3) getragen wird und in den verschlossenen Behälter (2) eingesetzt ist,
**gekennzeichnet durch** eine Abschirmung (5) zur Abschwächung eines elektrischen Feldes, die ein Isolator ist, der an beiden Seiten des Trägers (3) befestigt ist, um zwischen dem Träger (3) und dem Hochspannungsleiter (1) vorhanden zu sein; und
eine leitfähige Schicht (10), die einzig auf einer Innenfläche der Abschirmung (5) zur Abschwächung des elektrischen Feldes gebildet ist, die eine dem Hochspannungsleiter (1) entgegengesetzte Fläche ist und elektrisch mit dem Hochspannungsleiter (1) verbunden ist.

2. Gasisolierte Schaltanlage nach Anspruch 1, wobei die leitfähige Schicht (10) hoch leitfähig, halbleitend oder nicht linear leitfähig ist.

3. Gasisolierte Schaltanlage nach Anspruch 1, wobei die Abschirmung (5) zur Abschwächung des elektrischen Feldes ein thermoplastischer Kunststoff ist, der einem Formen unter Verwendung eines Formwerkzeugs unterzogen wurde.

4. Gasisolierte Schaltanlage nach Anspruch 1, wobei eine Außenfläche der Abschirmung (5) zur Abschwächung des elektrischen Feldes, die der Innenfläche entgegengesetzt ist, eine Oberflächenrauheit gleich oder kleiner als 5 µm aufweist.

5. Gasisolierte Schaltanlage nach Anspruch 1, wobei die Innenfläche der Abschirmung (5) zur Abschwächung des elektrischen Feldes eine Oberflächenrauheit gleich oder kleiner als 5 µm aufweist.

## Revendications

1. Appareillage de commutation isolé au gaz comprenant :
un contenant scellé (2) rempli d'un gaz d'isolation (4),
un support isolé (3),
un conducteur de haute tension (1) supporté par le support (3) et
inséré dans le contenant scellé (2),
**caractérisé par** un bouclier de facilitation de champ électrique (5) qui est un isolant fixé aux deux côtés du support (3) pour être présent entre le support (3) et le conducteur de haute tension (1) ; et
une couche conductrice (10) formée uniquement sur une surface interne du bouclier de facilitation de champ électrique (5) qui est une face opposée au conducteur de haute tension (1), et reliée électriquement au conducteur de haute tension (1).

2. Appareillage de commutation isolé au gaz selon la revendication 1, dans lequel la couche conductrice (10) est hautement conductrice, semiconductrice ou non-linéairement conductrice.

3. Appareillage de commutation isolé au gaz selon la revendication 1, dans lequel le bouclier de facilitation de champ électrique (5) est un plastique thermoplastique ayant subi un moulage en utilisant un moule.

4. Appareillage de commutation isolé au gaz selon la revendication 1, dans lequel une surface externe du bouclier de facilitation de champ électrique (5) opposé à la face interne a une rugosité de surface inférieure ou égale à 5 µm.

5. Appareillage de commutation isolé au gaz selon la revendication 1, dans lequel la face interne du bouclier de facilitation de champ électrique (5) a une rugosité de surface inférieure ou égale à 5 µm.
